# EUROPÄISCHE PATENTSCHRIFT

(11) **EP 3 729 384 B1**
(45) Veröffentlichungstag und Bekanntmachung des Hinweises auf die Patenterteilung: **29.01.2025**
(21) Anmeldenummer: 18814974.4
(22) Anmeldetag: 13.12.2018
(51) Int. Cl.: G07C 9/00

(54) **ZUGANGSKONTROLLSYSTEM MIT FUNK- UND GESICHTSERKENNUNG**
ACCESS CONTROL SYSTEM UTILIZING WIRELESS AND FACE RECOGNITION
SYSTÈME DE CONTRÔLE D'ACCÈS AVEC RECONNAISSANCE FACIALE ET RADIOÉLECTRIQUE

(30) Priorität: 20.12.2017 EP 17209068
(43) Veröffentlichungstag der Anmeldung: 28.10.2020
(73) Patentinhaber: INVENTIO AG, 6052 Hergiswil (CH)
(72) Erfinder: TROESCH, Florian, 8703 Erlenbach ZH (CH); FRIEDLI, Paul, 5453 Remetschwil (CH)
(74) Vertreter: Inventio AG
(86) Internationale Anmeldenummer: PCT/EP2018/084795
(87) Internationale Veröffentlichungsnummer: WO 2019/121335

(56) Entgegenhaltungen:
- EP-A1- 1 475 754
- US-A1- 2007 252 001
- US-A1- 2015 221 151
- US-B1- 6 819 219
- ANONYMOUS: "Using ePassport gates at airport border control", 29 September 2017 (2017-09-29), XP055482116, Retrieved from the Internet <URL:https://web.archive.org/web/20170929195635/https://www.nidirect.gov.uk/articles/using-epassport-gates-airport-border-control> [retrieved on 20180607]
- BYUN H ET AL: "ROBUST FACE DETECTION AND TRACKING FOR REAL-LIFE APPLICATIONS", INTERNATIONAL JOURNAL OF PATTERN RECOGNITION AND ARTIFICIAL INTELLIGENCE (IJPRAI), WORLD SCIENTIFIC PUBLISHING, SI, vol. 17, no. 6, 1 September 2003 (2003-09-01), pages 1035 - 1055, XP001171782, ISSN: 0218-0014, DOI: 10.1142/S0218001403002721

## Beschreibung

Die hier beschriebene Technologie betrifft allgemein ein Zugangskontrollsystem, das einem berechtigten Nutzer Zugang zu einer zugangsbeschränkten Zone in einem Gebäude oder einem Gelände gewährt. Ausführungsbeispiele der Technologie betreffen insbesondere ein Zugangskontrollsystem mit einer Sende- und Empfangseinrichtung und ein Verfahren zum Betreiben eines solchen Zugangskontrollsystems. Zugangskontrollsysteme können auf verschiedenste Art und Weise ausgestaltet sein. Die Ausgestaltungen können beispielsweise die Art betreffen, wie sich Nutzer (Personen) als zugangsberechtigt auszuweisen haben, z. B. mit einem Schlüssel, einer Magnet-, Chip- oder RFID Karte oder einem mobilen elektronischen Gerät (z. B. Mobiltelefon). WO 2010/112586 A1 beschreibt ein Zugangskontrollsystem, bei dem ein von einem Nutzer mitgeführtes Mobiltelefon einen Identifikationscode an einen Zugangsknoten sendet.

Falls der Identifikationscode als gültig erkannt wird, sendet der Zugangsknoten einen Zugangscode an das Mobiltelefon, das den Zugangscode auf einer Anzeige dargestellt. Hält der Nutzer das Mobiltelefon an eine Kamera, so dass diese den dargestellten Zugangscode erfassen kann, überprüft das Zugangskontrollsystem, ob der erfasste Zugangscode gültig ist. Ist er gültig, wird dem Nutzer der Zugang gewährt. Dieses Zugangskontrollsystem bietet eine gewisse Benutzerfreundlichkeit, weil die Nutzer keine Berechtigungsausweise oder herkömmliche Schlüssel bei sich tragen und sich keinen Zugangscode merken müssen. Stattdessen bietet das mobile elektronische Gerät, das viele Nutzer für Kommunikationszwecke sowieso bereits bei sich tragen, die Funktion eines Berechtigungsausweises oder Schlüssels.

Bei diesen Zugangskontrollsystemen ist es erforderlich, dass die Nutzer mit den Schlüsseln, Karten oder mobilen Geräten hantieren. Vor allem in Bereichen eines Gebäudes mit hohem Personenverkehrsaufkommen, z. B. in einer Eingangshalle, kann ein solches Hantieren umständlich sein und den Personenfluss behindern. Es besteht daher Bedarf an einer anderen, noch benutzerfreundlicheren Technologie.

Die US 2015/221151 A1 beschreibt ein auf Gesichtserkennung basierendes Zugangskontrollsystem und -verfahren, bei dem auf Basis einer empfangenen Gerätekennung ein biometrisches Referenz-Template aus einer Datenbank ausgelesen wird.

Ein Aspekt der vorliegenden Erfindung betrifft ein Verfahren nach Anspruch 1.

Ein anderer Aspekt der vorliegenden Erfindung betrifft ein System nach Anspruch 10.

Die hier beschriebene Technologie schafft ein Zugangskontrollsystem, bei dem kein Hantieren mit dem mobilen elektronischen Gerät durch den Nutzer erforderlich ist, insbesondere dann nicht, wenn der Nutzer bereits am oder nahe des Zugangs (z. B. einer Schleuse oder Barriere) ist. Eine erste Phase einer Überprüfung, ob der Nutzer zugangsberechtigt ist, erfolgt bereits wenn der Nutzer noch relativ weit vom Zugang entfernt ist. Der Nutzer kann sich beispielsweise in Richtung des Zugangs zur zugangsbeschränkten Zone bewegen, währenddessen in einem Ausführungsbeispiel das mobile elektronische Gerät des Nutzers schon in Kommunikation mit der Sende- und Empfangseinrichtung des Zugangskontrollsystems ist oder bereits war. Die Sende- und Empfangseinrichtung empfängt die Kennung des mobilen elektronischen Geräts und das Referenz-Template des Nutzers. Ist der Nutzer im Zugangskontrollsystem als zugangsberechtigt registriert, ist für den Nutzer ein Nutzerprofil gespeichert. Kommt der Nutzer in einen Erfassungsbereich einer Kamera des Zugangskontrollsystems, werden in einer zweiten Phase aus einer Kameraaufnahme Gesichtsmerkmale des Nutzers ermittelt und als Echtzeit-Template definiert. Stimmt das Echtzeit-Template mit einem gespeicherten Referenz-Template zu einem festgelegten Grad überein, ist der Nutzer erkannt und es kann für den Nutzer eine Gebäudeaktion veranlasst werden, ohne dass der Nutzer mit dem mobilen elektronischen Gerät hantieren muss. Ein berechtigter Nutzer kann somit quasi nahtlos in die zugangsbeschränkte Zone gelangen und die Gebäudeaktion in Anspruch nehmen.

Die hier beschriebene Technologie schafft ausserdem ein Zugangskontrollsystem, bei dem keine zentrale Speicherung von Gesichts-Templates in einem z. B. für längere Zeit (z. B. Monate oder Jahre) angelegten Nutzerprofil erfolgt. Das Referenz-Template eines Nutzers ist auf dem mobilen Gerät des Nutzers gespeichert (und unterliegt damit der Kontrolle des Nutzers) und wird nur dann zum Zugangskontrollsystem übermittelt, wenn der Nutzer tatsächlich vor Ort ist, z. B. um in einem Gebäude eine zugangsbeschränkte Zone betreten und eine Gebäudeaktion nutzen zu können. Selbst in diesem Fall wird das Referenz-Template im Zugangskontrollsystem nur solange temporär gespeichert, bis der Nutzer entweder Zugang erhält oder sich wieder ausserhalb der Funkreichweite befindet.

Die Technologie trägt somit dazu bei, die Interessen eines Nutzers bezüglich Datenschutz und Wahrung der Privatsphäre angemessen zu berücksichtigen.

Zu einer zugangsbeschränkten Zone in einem Gebäude oder einem Gebiet kann eine grosse Anzahl von Nutzern (z. B. mehrere Dutzend oder Hundert) zugangsberechtigt sein. In einer solchen Situation empfängt die Sende-und Empfangseinrichtung eine Vielzahl von Kennungen und Referenz-Templates, die in der Speichereinrichtung als Datensätze gespeichert werden. Trotzdem bietet die hier beschriebene Technologie den Vorteil, dass die Überprüfung auf Übereinstimmung schnell erfolgt, weil das vor Ort erzeugte Echtzeit-Template nur mit den Referenz-Templates der tatsächlich anwesenden Nutzer auf Übereinstimmung überprüft wird. Ein anwesender Nutzer kann somit ohne wesentliche Stockung oder Verzögerung in die zugangsbeschränkte Zone gelangen. Dies reduziert vor allem bei hohem Verkehrsaufkommen das Risiko, dass sich vor dem Zugang eine Warteschlange bildet.

Die Technologie bietet nicht nur eine schnellere Überprüfung, sie kann auch bei hohen Anforderungen an die Sicherheit eingesetzt werden, weil beispielsweise eine Authentifizierung über eine gesicherte (verschlüsselte) Funkverbindung erfolgt. Die per Funk übertragene Kennung muss im System zu einem registrierten Nutzer gehören; dadurch kann der Nutzer erkannt und die für den Nutzer festgelegten Rechte (z. B. Zugangsrechte) können ermittelt werden. Neben der Funkverbindung wird als ein weiterer Kanal die optische Erfassung des Gesichts des Nutzers genutzt. Durch diesen optischen Kanal kann erkannt werden, welcher der möglicherweise zahlreichen anwesenden Nutzer tatsächlich Zugang wünscht, so dass nur diesem Nutzer Zugang gewährt und die für diesen Nutzer festgelegte Gebäudeaktion ausgeführt wird.

Die Technologie reduziert auch den Aufwand zum Verwalten der Nutzerprofile. Da die Referenz-Templates nicht zentral gespeichert werden, ist es z. B. auch nicht erforderlich, diese zu aktualisieren, wenn sich beispielsweise das Aussehen eines Nutzers nach einiger Zeit verändert hat. Um die Speicherung des (aktuellen) Referenz-Templates auf dem mobilen Gerät kümmert sich jeder Nutzer selbst. Vor der erstmaligen Nutzung eines mobilen Geräts gemäss der hier beschriebenen Technologie erzeugt der Nutzer ein Bild von sich selbst, das als ein Referenz-Template im mobilen Gerät gespeichert wird. Danach kann jeder Nutzer z. B. in regelmässigen Abständen daran erinnert werden, ein neues (aktuelles) Bild von sich zu machen. Dadurch wird erreicht, dass das Echtzeit-Template eines Nutzers zu einem hohen Mass mit dem Referenz-Template des Nutzers übereinstimmt.

Bei der hier beschriebenen Technologie ist zum einen die Überprüfung auf Übereinstimmung auf eine begrenzte Menge von Referenz-Templates beschränkt. Zum anderen erfolgt die Authentifizierung eines Nutzers basierend auf der empfangenen Kennung, die im Fall eines zugangsberechtigten Nutzers einem gespeicherten Nutzerprofil zugeordnet ist. Für die Bildverarbeitungseinrichtung bedeutet dies, dass an einen darin implementierten Bildverarbeitungsalgorithmus relativ geringe Anforderungen gestellt werden, beispielsweise hinsichtlich Erkennungsgenauigkeit. Im Vergleich zu einem Bildverarbeitungsalgorithmus, dessen Aufgabe es ist, eine Person aufgrund von relativ vielen Gesichtsmerkmalen mit einer hohen Erkennungsgenauigkeit zu identifizieren (d. h., der Grad der Übereinstimmung muss relativ hoch sein, beispielsweise größer ca. 90 %), genügt es bei der hier beschriebenen Technologie, relativ wenig Gesichtsmerkmale einem Referenz-Template eines anwesenden Nutzers zuzuordnen. Außerdem kann der Grad der Übereinstimmung zum Beispiel auf zwischen ca. 60 % und ca. 90 % festgelegt werden. Es kann daher ein kostengünstiger Bildverarbeitungsalgorithmus verwendet werden; die Anforderungen an die Sicherheit können aber trotzdem gewährleistet werden.

Erfindungsgemäß umfasst das Prüfen auf Übereinstimmung ein Erzeugen eines Ergebnissignals. Bei Übereinstimmung wird ein Ausführen einer Gebäudeaktion veranlasst. Die Gebäudeaktion ist spezifisch für den erkannten Nutzer. Um diese Gebäudeaktion zu ermitteln, wird ein in der Speichereinrichtung gespeichertes Nutzerprofil des erkannten Nutzers gelesen; dort kann beispielsweise das Stockwerk angegeben sein, zu dem der Nutzer zugangsberechtigt ist. Die nutzerspezifische Gebäudeaktion kann ein Entriegeln einer Gebäudetür (z. B. Büro- oder Wohnungstür einschliesslich einer oder mehrerer Türen, die sich auf dem Weg vom Zugang zur Büro- oder Wohnungstür befinden) umfassen. In Verbindung mit einer Aufzugsanlage kann die nutzerspezifische Gebäudeaktion auch ein Registrieren eines Zielrufs auf ein für den Nutzer festgelegtes Zielstockwerk umfassen. Dadurch wird die Benutzerfreundlichkeit verbessert, weil der Nutzer direkt zu einer zugeteilten Aufzugskabine gehen kann, ohne selbst einen Aufzugsruf eingeben zu müssen. Die nutzerspezifische Gebäudeaktion kann auch eine Kombination aus dem Entriegeln einer Gebäudetür und dem Registrieren eines Zielrufs umfassen.

Ausserdem gibt das Ergebnissignal an, dass der Nutzer Zugang zur zugangsbeschränkten Zone hat, während es bei Nichtübereinstimmung angibt, dass der Nutzer keinen Zugang zur zugangsbeschränkten Zone hat. Als Funktion des Ergebnissignals kann in einem Ausführungsbeispiel ein Steuersignal erzeugt werden, um eine (physische) Barriere (z. B. Schranke, Tür oder Drehkreuz) freizugeben. Eine nicht freigegebene Barriere bleibt blockiert. In einem anderen Ausführungsbeispiel aktiviert das Steuersignal bei einer Zugangsverwehrung eine Informationseinrichtung. Die Informationseinrichtung kann z. B. in Verbindung mit einem Zugang ohne eine physische Barriere eingesetzt werden. Wird ein unberechtigter Nutzer am Zugang erkannt, kann in einem Fall die Informationseinrichtung einen Alarm erzeugen, der am Zugang wahrnehmbar (akustisch und/oder visuell) ist. Das Steuersignal kann in einem anderen Fall einen Sicherheitsdienst alarmieren, der daraufhin den als nicht zugangsberechtigt erkannten Nutzer überprüft.

In einem Ausführungsbeispiel erfolgt die Funkverbindung zwischen der Sende- und Empfangseinrichtung und einem mobilen elektronischen Gerät eines Nutzers gemäss einem Bluetooth-Standard oder einem WLAN/WiFi-Standard. Dies ist von Vorteil, weil handelsübliche Mobiltelefone oder Smartphones bereits mit Technologie gemäss einem dieser Standards ausgestattet sind und somit keine speziellen Geräte benötigt werden.

Die hier beschriebene Technologie ermöglicht auch Flexibilität bezüglich der Kennung eines mobilen Geräts. Die Kennung eines mobilen Geräts kann beispielsweise eine dem Gerät fest zugeordnete Geräteidentifikationsnummer oder eine dem mobilen Gerät zugeordnete Telefonnummer umfassen. In einem Ausführungsbeispiel ist jedes mobile Gerät mit einer anwendungsspezifischen Software ausgestattet, die eine für das mobile Gerät einzigartige und zeitlich unveränderliche Kennung erzeugt. Die Kennung (unabhängig davon, ob sie eine Geräteidentifikationsnummer oder eine Telefonnummer umfasst oder durch Software erzeugt ist) ermöglicht die eindeutige Identifikation eines mobilen Geräts.

In einem Ausführungsbeispiel ist die Bildverarbeitungseinrichtung modular aufgebaut; ein Bildverarbeitungsmodul erzeugt aus einer Kameraaufnahme das Echtzeit-Template, und ein Auswertemodul, das mit dem Bildverarbeitungsmodul und der Speichereinrichtung verbunden ist, erzeugt ein Ergebnissignal, das angibt, ob das Echtzeit-Template mit einem Referenz-Template übereinstimmt. Eine solche Modularität erlaubt eine effiziente Anpassung der Module an unterschiedliche Anforderungen (z. B. Implementierung eines kostengünstigen Bildverarbeitungsalgorithmus im Auswertemodul).

Modularität ist in einem Ausführungsbeispiel auch bezüglich eines Prozessors gegeben, der mit der Bildverarbeitungseinrichtung verbunden ist. Abhängig vom Ergebnissignal erzeugt der Prozessor ein Steuersignal, um ein Lesen eines in der Speichereinrichtung gespeicherten Nutzerprofils des erkannten Nutzers zu veranlassen, um daraufhin eine nutzerspezifische Gebäudeaktion zu veranlassen. Der Prozessor steuert das Zugangskontrollsystem zudem so, dass dem Nutzer Zugang gewährt oder verwehrt wird.

Im Folgenden sind verschiedene Aspekte der verbesserten Technologie anhand von Ausführungsbeispielen in Verbindung mit den Figuren näher erläutert. In den Figuren haben gleiche Elemente gleiche Bezugszeichen. Es zeigen:
- Fig. 1: eine schematische Darstellung eines Anwendungsbeispiels eines Zugangskontrollsystems in Verbindung mit einem Gebäude;
- Fig. 2: eine schematische Darstellung eines Ausführungsbeispiels eines Zugangskontrollsystems;
- Fig. 3: ein Ablaufdiagram eines Ausführungsbeispiels eines Zugangskontrollverfahrens als ein Aspekt eines Verfahrens zum Betreiben des Zugangskontrollsystems; und
- Fig. 4: ein beispielhaftes Signaldiagramm zur Darstellung eines Ausführungsbeispiels eines Besucher-Registrierungsverfahrens als ein Aspekt eines Verfahrens zum Betreiben des Zugangskontrollsystems.

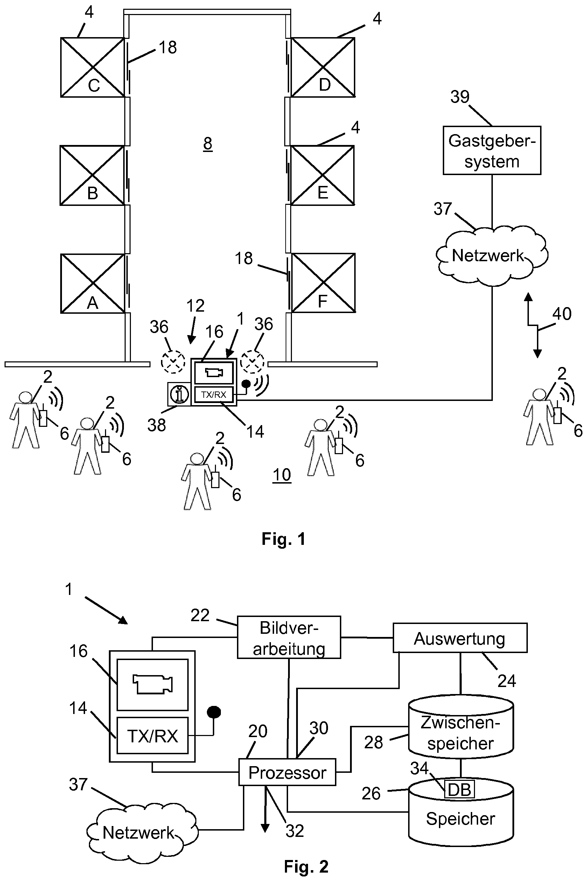

Fig. 1 ist eine schematische Darstellung eines Anwendungsbeispiels eines Zugangskontrollsystems 1 in Verbindung mit einer Situation in einem Gebäude, von dem aus Darstellungsgründen lediglich einige Wände, Räume 4 und Zonen 8, 10 gezeigt sind. Die Räume 4 können z. B. Büros, Wohnungen, Hallen und/oder Aufzugskabinen eines Aufzugsystems sein. In der in Fig. 1 gezeigten Anwendung des Zugangskontrollsystems 1 befinden sich in der Zone 10 mehrere Nutzer 2, die mobile elektronische Geräte 6 (im Folgenden auch als mobile Geräte 6 bezeichnet), mit sich führen. Die Zone 10 unterliegt in diesem Beispiel keiner Zugangsbeschränkung und wird im Folgenden auch als öffentliche Zone 10 bezeichnet. Die öffentliche Zone 10 kann ein Bereich im oder ausserhalb des Gebäudes sein. Ein Zugang 12 trennt die öffentliche Zone 10 von der Zone 8, die einer Zugangsbeschränkung unterliegt und an die Räume 4 angrenzt. Der Fachmann erkennt, dass das Zugangskontrollsystem 1 nicht auf Anwendungen innerhalb eines Gebäudes beschränkt ist, sondern in analoger Weise auch zur Kontrolle des Zugangs zu einer zugangsbeschränkten Zone auf einem Gelände verwendet werden kann. Unter dem Begriff "Gebäude" sind in dieser Beschreibung z. B. Wohngebäude, Geschäftsgebäude, Sportarenen, Einkaufszentren, aber auch Schiffe zu verstehen.

Das Zugangskontrollsystem 1 überwacht den Zugang 12, sodass nur berechtigte Nutzer 2 in die Zone 8 gelangen können, beispielsweise durch Blockieren oder Freigeben einer Tür, einer Schranke, eines Drehkreuzes, oder einer anderen physischen Barriere oder Schleuse, durch Ansteuern (z. B. Aktivieren) einer Informationseinrichtung 38 im Fall eines Zugangs ohne physische Barriere, wenn ein unberechtigter Nutzer 2 erkannt wird, oder durch Kombinieren dieser Massnahmen. Die Informationseinrichtung 38 kann z. B. einen optischen und/oder akustischen Alarm auslösen oder eine Benachrichtigung eines Sicherheitsdienstes veranlassen. In Fig. 1 ist das Zugangskontrollsystem 1 zur Veranschaulichung als im Zugang 12 angeordnet eingezeichnet. Je nachdem für welches Verkehrsaufkommen das Zugangskontrollsystem 1 vorgesehen ist, besteht der Zugang 12 aus mehreren einzelnen Schleusen; in Fig. 1 kann z. B. jedes der beiden Drehkreuze 36 eine Schleuse darstellen. Der Fachmann erkennt, dass in einer konkreten Implementierung das Zugangskontrollsystem 1 bzw. seine Komponenten auf verschiedene Art und Weise angeordnet sein können.

Die in Fig. 1 dargestellten Räume 4 können beispielsweise zu einer Gruppe von Aufzügen gehören, die z. B. sechs Aufzüge (A-F) umfasst. Wird ein Nutzer 2 am Zugang 12 erkannt, bedeutet dies in einem Ausführungsbeispiel, dass der Nutzer 2 mit einem der Aufzüge auf ein für diesen Nutzer 2 festgelegtes Zielstockwerk transportiert werden möchte. Mit dem Erkennen des Nutzers 2 wird ein Zielruf veranlasst, dem eine Aufzugssteuerung einen Aufzug zuweist. Der zugewiesene Aufzug wird dem Nutzer 2 mitgeteilt, beispielsweise mittels einer Anzeigeeinheit. In der in Fig. 1 gezeigten Situation kann jedem Drehkreuz 36 jeweils eine Anzeigeeinheit zugeordnet sein. Nutzt der Nutzer 2 beispielsweise eines der in Fig. 1 gezeigten Drehkreuze 36, erkennt das Zugangskontrollsystem 1, an welchem Drehkreuz 36 sich der Nutzer 2 befindet und steuert die dort angeordnete Anzeigeeinheit an, um den zugeteilten Aufzug (z. B. "A") anzuzeigen.

Wie in Fig. 1 angedeutet, umfasst das Zugangskontrollsystem 1 eine Sende- und Empfangseinrichtung 14 (in Fig. 1 als TX/RX dargestellt) und eine Kamera 16 als Teil einer Bildverarbeitungseinrichtung; weitere Komponenten des Zugangskontrollsystem 1 sind in Fig. 2 gezeigt. Erfindungsgemäß ist die Sende- und Empfangseinrichtung zum Empfang von Funksignalen ausgestaltet, sie ist im Folgenden auch als Transceiver 14 bezeichnet. Der Transceiver 14 kommuniziert mit den mobilen elektronischen Geräten 6, wenn sie sich in Funkreichweite zum Transceiver 14 befinden, d. h. ein von einem mobilen Gerät 6 ausgesendetes Funksignal hat am Ort des Transceivers 14 eine Signalstärke (beispielsweise ausgedrückt durch einen RSSI-Wert (Received Signal Strength Indicator)), die grösser als ein für einen sicheren Empfang festgelegter Schwellenwert ist. Die Kommunikation erfolgt beispielsweise über ein Nahfeld-Funknetz wie z. B. ein Bluetooth-Funknetz, WLAN/WiFi- oder ein ZigBee-Funknetz. Bluetooth ist ein Standard gemäss IEEE 802.15.1, WLAN/WiFi ist ein Standard gemäss IEEE 802.11, Zig-Bee ist ein Standard gemäss IEEE 802.15.4; solche Funknetze gemäss diesen Standards dienen der kabellosen Vernetzung von Geräten über eine kurze Distanz von ca. einigen Metern bis ca. hundert Meter. Das Funknetz bildet dabei die Schnittstelle, über die das mobile elektronische Gerät 6 und der Transceiver 14 miteinander kommunizieren können.

In der in Fig. 1 gezeigten Situation ist die hier beschriebene Technologie in vorteilhafter Weise anwendbar, um das Zugangskontrollsystem 1 mit möglichst geringer Komplexität zu betreiben und dem Nutzer 2 komfortabel Zugang zur zugangsbeschränkten Zone 8 zu gewähren. Kurz und beispielhaft zusammengefasst erfolgt der Betrieb des Zugangskontrollsystems 1 gemäss einem Ausführungsbeispiel wie folgt: Sobald ein Nutzer 2 in Funkreichweite zum Transceiver 14 ist, kommuniziert sein mobiles Gerät 6 über eine Funkverbindung automatisch mit dem Transceiver 14 und das mobile Gerät 6 sendet seine gerätespezifische Kennung zum Transceiver 14. Das mobile Gerät 6 sendet ausserdem Gesichtsparameter des Nutzers 2 in Form eines elektronischen Referenz-Templates zum Transceiver 14. In der Situation gemäss Fig. 1 empfängt der Transceiver 14 eine Vielzahl von Kennungen und Referenz-Templates. Das Zugangssystem 1 "weiss" daher, wie viele mobile Geräte 6 sich zu einem bestimmten Zeitpunkt in Funkreichweite befinden und, wenn deren Nutzer 2 für das Gebäude registrierte Nutzer 2 sind, zu welchen Nutzern 2 die mobilen Geräte 6 gehören. Zu diesem Zeitpunkt kann das Zugangskontrollsystem 1 für jeden registrierten Nutzer 2 prüfen, welche Rechte für den Nutzer im Gebäude festgelegt sind (z. B. Zutrittsberechtigung zu einem oder mehreren Räumen 4 und/oder Stockwerken, einschliesslich evtl. zeitlicher Beschränkungen).

Die so erfassten Nutzer 2 stellen eine Gruppe von anwesenden Nutzern 2 dar. Möchte nun einer der anwesenden Nutzer 2 Zugang zur zugangsbeschränkten Zone 8, bewegt sich der Nutzer 2 in Richtung des Zugangs 12, was vom Zugangskontrollsystem 1 erkannt wird. Das Zugangskontrollsystem 1 ermittelt im Rahmen eines Bildverarbeitungs- bzw. Gesichtserkennungsverfahrens einen Datensatz mit Gesichtsmerkmalen (Echtzeit-Template) dieses Nutzers 2 und vergleicht dieses Echtzeit-Template mit den gespeicherten Referenz-Templates, die den anwesenden Nutzern 2 zugeordnet sind. Dieser Vergleich ist auf die Gruppe der anwesenden Nutzer 2 beschränkt; es werden somit nur die Datensätze dieser Gruppe daraufhin durchsucht, ob der ermittelte Datensatz zu einem der gespeicherten Datensätze passt. Dadurch kann erkannt werden, welcher der anwesenden Nutzer 2 zu diesem Zeitpunkt tatsächlich Zugang wünscht und welche Rechte dieser Nutzer 2 hat. Für diesen Nutzer 2 kann beispielsweise eine in einem Nutzerprofil festgelegte Gebäudeaktion veranlasst werden; für den Nutzer 2 können beispielsweise ein Zielruf registriert und daran anschliessend ein Aufzug zugeteilt werden, der den Nutzer 2 auf das Stockwerk transportiert, auf dem sich der Arbeitsplatz des Nutzers 2 befindet.

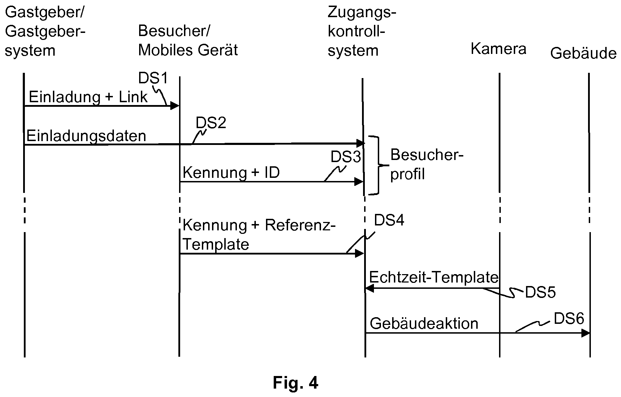

Fig. 1 zeigt ausserdem ein Kommunikationsnetzwerk 37, das in einem Ausführungsbeispiel mit einem Gastgebersystem 39 und dem Zugangskontrollsystem 1 kommunikativ verbunden ist. Ausserdem ist angedeutet, dass ein Nutzer 2 über das Kommunikationsnetzwerk 37 mittels einer Kommunikationsverbindung 40 kommunizieren kann, beispielsweise mit dem Gastgebersystem 39 oder einem Webportal. Beispielhafte Anwendungen des Kommunikationsnetzwerks 37 und des Gastgebersystems 39 sind in Verbindung mit Fig. 4 beschrieben.

Fig. 2 zeigt eine schematische Darstellung eines Ausführungsbeispiels des Zugangskontrollsystems 1. Das Zugangskontrollsystem 1 ist in einem Ausführungsbeispiel modular aufgebaut und umfasst eine Bildverarbeitungseinrichtung, die neben der Kamera 16 ein Bildverarbeitungsmodul 22 (Bildverarbeitung in Fig. 2) und ein Auswertemodul 24 (Auswertung in Fig. 2) umfasst. Zusätzlich umfasst das Zugangskontrollsystem 1 den Transceiver 14, einen Prozessor 20, eine Speichereinrichtung 26 (Speicher in Fig. 2) und eine Zwischenspeichereinrichtung 28 (Zwischenspeicher in Fig. 2). Der Fachmann erkennt, dass mindestens eine der Speichereinrichtungen 26, 28 auch der Bildverarbeitungseinrichtung zugeordnet werden kann oder dass die Funktion der Zwischenspeichereinrichtung 28 durch die Speichereinrichtung 26 wahrgenommen werden kann und somit die Zwischenspeichereinrichtung 28 in einem Ausführungsbeispiel entfallen kann.

Der Prozessor 20 hat einen Ausgang 32 für ein Steuersignal und einen Eingang 30 für ein vom Auswertemodul 24 erzeugtes Ergebnissignal. Abhängig vom Ergebnissignal steuert der Prozessor 20 das Zugangskontrollsystem 1 so, dass dem Nutzer 2 Zugang gewährt oder verwehrt wird. Bei Zugangsgewährung kann beispielsweise auch ein Zielruf veranlasst werden, und der diesem Zielruf zugeteilte Aufzug kann dem Nutzer 2 angezeigt werden. Trennt beispielsweise eine physische Barriere (z. B. Drehkreuz 36 in Fig. 1) die Zonen 8, 10, gibt das Steuersignal die Barriere frei (beispielsweise in Verbindung mit der Anzeige des zugeteilten Aufzugs) oder blockiert diese. Erfolgt die Zonentrennung dagegen ohne eine physische Barriere, steuert das Steuersignal im Fall eines unberechtigten Nutzers 2 beispielsweise die Informationseinrichtung 38 für eine Alarmerzeugung an oder alarmiert einen Sicherheitsdienst. Die Informationseinrichtung 38 kann auch angesteuert werden, um in Verbindung mit einer Barriere dem Nutzer 2 oder einem Sicherheitsdienst anzuzeigen, dass die Barriere freigegeben oder blockiert wurde.

Die Kamera 16 erzeugt eine Kameraaufnahme eines Nutzers 2 (insbesondere dessen Gesicht), der sich im Erfassungsbereich der Kamera 16 befindet, wenn der Nutzer 2 am Zugang 12 die zugangsbeschränkte Zone 8 betreten möchte. In einem Ausführungsbeispiel umfasst die Kamera 16 eine Digitalkamera mit auswählbaren und/oder einstellbaren Eigenschaften; Kameraaufnahmen liegen in diesem Ausführungsbeispiel somit als digitale Datensätze (digitale Kameraaufnahme (auch als Digitalbild bezeichnet)) vor. Die Eigenschaften der Digitalkamera, zum Beispiel Auflösung (z. B. in Megapixel angegeben), Belichtung und Brennweite, sind so gewählt bzw. eingestellt, dass eine Kameraaufnahme (Digitalbild) auswertbar ist und das Gesicht des Nutzers 2 in auswertbarer Qualität auf dem Digitalbild erkennbar ist. Das Digitalbild liegt beispielsweise in einem JPEG Format vor, es kann aber auch in einem anderen Format vorliegen, beispielsweise im BMP oder JPEG2000 Format.

Die Kamera 16 kann mit einem Sensormodul ausgestattet oder mit einem separaten Sensormodul verbunden sein, das die Kamera 16 aktiviert, wenn es die Anwesenheit eines Nutzers 2 im Erfassungsbereich der Kamera 16 detektiert. Das Sensormodul kann beispielsweise einen Näherungssensor umfassen, der als ein Ultraschallsensor, ein Infrarotsensor oder ein optischer Sensor (z. B. Lichtschranke, Helligkeitssensor) ausgestaltet sein kann. Alternativ dazu kann in einem Ausführungsbeispiel die Anwesenheit eines Nutzers 2 im Erfassungsbereich der Kamera 16 dadurch erkannt werden, dass Änderungen im Erfassungsbereich detektiert werden. Tritt der Nutzer 2 beispielsweise in den Erfassungsbereich und ist die Kamera 16 kontinuierlich in einem aktiven Zustand, zeichnet die Kamera 16 Änderungen vor einem im Wesentlichen statischen Hintergrund auf; diese Änderungen werden als Anwesenheit interpretiert.

Der Transceiver 14 und die Kamera 16 (einschliesslich anderer Komponenten der Bildverarbeitungseinrichtung) können in einem Gehäuse, das z. B. wie in Fig. 1 gezeigt im Zugang 12 angeordnet ist, angeordnet sein. Alternativ dazu können der Transceiver 14 und die Kamera 16 (einschliesslich anderer Komponenten der Bildverarbeitungseinrichtung) auch getrennt voneinander als separate Einheiten angeordnet sein, beispielsweise räumlich voneinander getrennt in einem Bereich um den Zugang 12, wobei die Kamera 16 so anzuordnen ist, dass im Wesentlichen nur derjenige Nutzer 2 erfasst wird, der auch tatsächlich Zugang wünscht. Je nach Ausgestaltung des Zugangskontrollsystems 1 können mehrere Kameras 16 vorhanden sein, beispielsweise kann jeder Barriere (z. B. Drehkreuz 36) eine Kamera 16 zugeordnet sein.

Das Auswertemodul 24 ist zur Veranschaulichung als separate Einheit gezeigt, die mit dem Bildverarbeitungsmodul 22, dem Prozessor 20 und der Zwischenspeichereinrichtung 28 verbunden ist. In einem Ausführungsbeispiel bilden das Auswertemodul 24 und das Bildverarbeitungsmodul eine Einheit. Die Speichereinrichtungen 26, 28 sind ebenfalls zur Veranschaulichung als separate Einheiten gezeigt; je nach Ausgestaltung können sie in einer Speichereinrichtung zusammengefasst sein, wo sie beispielsweise getrennte Speicherbereiche belegen. Unabhängig davon können die Speichereinrichtungen 26, 28 beispielsweise ein Festplatten (HDD)- oder CD/DVD-Laufwerk, ein Halbleiterlaufwerk/Solid-State-Disk (SSD), oder Kombinationen davon, oder andere Speichereinrichtungen für digitale Daten umfassen.

Die genannte Einheit aus Auswertemodul 24 und Bildverarbeitungsmodul 22 umfasst mindestens eine Prozessoreinheit, die ein computergestütztes Verfahren zur Bildverarbeitung ausführt. Bildverarbeitungsverfahren sind bekannt, beispielsweise aus US 8,494,231 B2. Eine grundsätzliche Darstellung der Bildverarbeitung zum Zweck der Gesichtserkennung ist in der Veröffentlichung "Gesichtserkennung" des deutschen Bundesamts für Sicherheit in der Informationstechnik (unter dem Thema Biometrie verfügbar unter der Internet-Adresse www.bsi.bund.de) beschrieben. Diese Veröffentlichung unterscheidet zwischen den drei Hauptarbeitsschritten "Template erzeugen", "Referenzdatensatz erzeugen" und "Gesichtsbilder vergleichen". Um den Vergleich zweier Gesichtsbilder möglichst einfach und schnell zu halten, werden die Merkmale eines Gesichts ermittelt und in Form eines als "Template" bezeichneten Merkmalsdatensatzes gespeichert. Wenn auf einem Bild eines Nutzers das Gesicht gefunden und normalisiert wurde, werden neben den Augen, der Nase und der Mund- /Kinnpartie weitere Merkmale gesucht, vermessen und zueinander in Bezug gesetzt. Diese extrahierten Merkmale werden codiert, komprimiert und als Merkmalsdatensatz (Template) gespeichert. Um die Ähnlichkeit der Templates zweier Gesichtsbilder zu bestimmen, werden sie mittels eines mathematischen Algorithmus kombiniert. Daraus ergibt sich ein Grad der Ähnlichkeit der Templates. Wenn das Resultat innerhalb gewisser Toleranzgrenzen liegt, werden die beiden Templates, und damit die ihnen zugrundeliegenden Gesichtsbilder als identisch eingestuft.

Gemäss der hier beschriebenen Technologie sendet das mobile Gerät 6 seine gerätespezifische Kennung und das elektronische Referenz-Template des Nutzers 2 zum Transceiver 14 sobald es in Funkreichweite zum Transceiver 14 ist. Der Prozessor 20 steuert die Speicherung der empfangenen Kennung und des empfangenen Referenz-Templates als Datensatz in der Zwischenspeichereinrichtung 28. In der in Fig. 1 gezeigten Situation halten sich mehrere Nutzer 2 in der öffentlichen Zone 10 auf. Dabei ist beispielhaft angenommen, dass die mobilen Geräte 6 der anwesenden Nutzer 2 für die Nutzung der hier beschriebenen Technologie, u. a. Senden einer Kennung und eines Referenz-Templates, ausgestaltet sind. Von den anwesenden Nutzern 2 können einige Zugang zur zugangsbeschränkten Zone 8 wünschen, einige können von der Zone 8 kommend auf dem Weg zu einem Gebäudeausgang sein und wiederum andere können auf dem Weg zu einem anderen Teil des Gebäudes sein. Das bedeutet in der gezeigten Situation, dass nicht jeder Nutzer 2, der sich in der öffentlichen Zone 10 aufhält, auch tatsächlich in die Zone 8 gelangen möchte. Aus Sicht des Zugangskontrollsystems 1 sind jedoch alle anwesenden Nutzer 2 potentielle Nutzer 2, die früher oder später Zugang wünschen könnten.

Die Zwischenspeichereinrichtung 28 speichert in einer solchen Situation für jeden anwesenden Nutzer 2 einen Datensatz, der die Kennung des dem Nutzer 2 zugeteilten mobilen Geräts 6 und das Referenz-Template des Nutzers 2 enthält. Dabei kann es sich sowohl um mobile Geräte 6 handeln, deren Nutzer 2 als zugangsberechtige Nutzer 2 im Zugangskontrollsystem 1 registriert sind, als auch um mobile Geräte 6, deren Nutzer 2 nicht registriert sind. Verlässt ein Nutzer 2 die öffentliche Zone 10, so dass sich das zugehörige mobile Gerät 6 ausserhalb der Funkreichweite befindet, wird der für diesen Nutzer 2 angelegte Datensatz in der Zwischenspeichereinrichtung 28 gelöscht und die Zwischenspeichereinrichtung 28 aktualisiert.

Das Zugangskontrollsystem 1 ermittelt die anwesenden Nutzer 2 mit Hilfe der Kommunikation zwischen den mobilen Geräten 6 und dem Transceiver 14. In jedem mobilen Gerät 6 ist ein Funkmodul, beispielsweise ein Modul gemäss einem Bluetooth Standard, aktiviert, um mit dem Transceiver 14 kommunizieren zu können, sobald es sich in Funkreichweite zum Transceiver 14 befindet. Das mobile Gerät 6 ist zum Senden der gerätespezifischen Kennung und des Referenz-Templates entsprechend konfiguriert. Es kann z. B. eine anwendungsspezifische Softwareanwendung (auch als App bezeichnet) aufweisen, die beispielsweise durch den Nutzer 2 aktivierbar ist. Die anwendungsspezifische Softwareanwendung wird in einem Ausführungsbeispiel in Verbindung mit der Zugangskontrolle und der Nutzung von Aufzügen verwendet. Die anwendungsspezifische Software erzeugt in einem Ausführungsbeispiel eine für das mobile Gerät 6 einzigartige und zeitlich unveränderliche Kennung. Eine solche durch Software erzeugte Kennung stellt eine Alternative zu der oben genannten Geräteidentifikationsnummer und einer Telefonnummer dar.

Für jeden registrierten Nutzer 2 ist im Zugangskontrollsystem 1 ein Nutzerprofil angelegt, d. h. es ist als Datensatz in einer Datenbank 34 gespeichert. Die Datenbank 34 ist in einem Ausführungsbeispiel in der Speichereinrichtung 26 eingerichtet. Das Nutzerprofil umfasst persönliche Daten des Nutzers 2 (z. B. Name, Berechtigungsgrund (Bewohner, Mitarbeiter, externer Dienstleister, Besucher)), Zugangsberechtigungen (z. B. bestimmte Räume 4 und Stockwerke) und evtl. zeitliche Zugangsbeschränkungen (z. B. Zugang von Montag bis Freitag, von 7:00 bis 20:00). Im Nutzerprofil ist dem Nutzer 2 ausserdem mindestens ein mobiles Gerät 6 zugeordnet. Alternativ zum Anlegen des Nutzerprofils im Zugangskontrollsystem 1 kann das Nutzerprofil in einer Datenbank eines Gebäudeverwaltungssystems angelegt sein, wobei das Zugangskontrollsystem 1 auf diese Datenbank mittels eines Kommunikationsnetzes zugreifen kann.

Wünscht einer der anwesenden Nutzer 2 Zugang zur zugangsbeschränkten Zone 8, kommt der Nutzer 2 in einen Erfassungsbereich der am Zugang 12 angeordneten Kamera 16 und die Kamera 16 erzeugt ein oder mehrere Digitalbilder oder eine Videoaufnahme, die jeweils als digitaler Datensatz vorliegen und zur Weiterverarbeitung kurzzeitig gespeichert werden. Das Bildverarbeitungsmodul 22 ermittelt aus dem Datensatz das Echtzeit-Template, wie an anderer Stelle dieser Beschreibung ausgeführt. Ist das Echtzeit-Template ermittelt, startet das Auswertemodul 24 einen Suchalgorithmus, um zu ermitteln, ob das Echtzeit-Template in der Zwischenspeichereinrichtung 28 einem anwesenden Nutzer 2 zugeordnet werden kann. Stimmt das Echtzeit-Template mit einem gespeicherten Referenz-Template zu einem festgelegten Grad überein, ist aus der Gruppe der Nutzer 2 derjenige Nutzer 2 erkannt, der zu diesem Zeitpunkt Zugang wünscht.

Das mobile Gerät 6 kann beispielsweise ein Mobiltelefon, ein Smartphone, ein Tablet PC oder eine Smartwatch sein, wobei diese Geräte üblicherweise mit Hardware ausgestattet sind, die eine Kommunikation über ein Nahfeld-Funknetz ermöglichen. Das mobile Gerät 6 kann aber auch eine Brille mit Miniaturcomputer oder ein anderes am Körper getragenes, computergestütztes Gerät (auch als "Wearable Device" bezeichnet) sein, wenn diese Geräte für eine Nahfeld-Kommunikation und zur Speicherung von Daten (hier: Daten eines Referenz-Templates für Gesichtsparameter) vorgesehen sind. Je nach Ausgestaltung des mobilen Geräts 6 kann es z. B. über ein graphisches Nutzerinterface (auch als Graphical User Interface, GUI, bezeichnet) verfügen, um das mobile Gerät 6 und dessen Funktionen selektiv aktivieren und deaktivieren zu können.

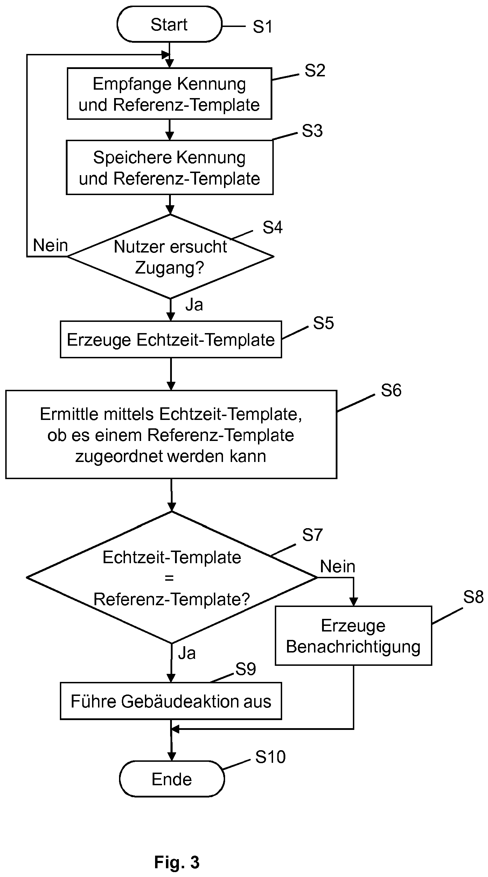

Mit dem Verständnis der oben beschriebenen prinzipiellen Systemkomponenten und deren Funktionalitäten, erfolgt im Folgenden in Verbindung mit Fig. 3 eine Beschreibung eines beispielhaften Zugangskontrollverfahrens als ein Aspekt eines Verfahrens zum Betreiben des Zugangskontrollsystems 1. Die Beschreibung erfolgt mit Bezug auf einen Nutzer 2, der am Zugang 12 die zugangsbeschränkte Zone 8 zu betreten wünscht, beispielsweise um dort einen Aufzug zu benutzen. Der Nutzer 2 trägt das mobile Gerät 6 bei sich und hat dessen Funkmodul (z. B. für Bluetooth-Kommunikation) aktiviert. Ausserdem ist im mobilen Gerät 6 bereits ein Referenz-Template für Gesichtsmerkmale des Nutzers 2 gespeichert. Eine dazugehörige Softwareanwendung ist ebenfalls aktiviert. Das Verfahren beginnt in einem Schritt S1 und endet in einem Schritt S10.

Befindet sich der Nutzer 2 mit seinem mobilen Gerät 6 in der öffentlichen Zone 10 und in Funkreichweite zum Transceiver 14, empfängt der Transceiver 14 in einem Schritt S2 eine vom mobilen Gerät 6 ausgesendete gerätespezifische Kennung. Der Transceiver 14 und das mobile Gerät 6 kommunizieren gemäss dem gleichen Kommunikationsstandard, in diesem Ausführungsbeispiel über eine Funkverbindung gemäss einem Bluetooth Standard. Der Transceiver 14 empfängt ausserdem ein Referenz-Template für Gesichtsparameter des Nutzers 2. Die Kennung und das Referenz-Template können im Wesentlichen gleichzeitig oder zeitlich nacheinander vom mobilen Gerät 6 gesendet werden. In Fig. 3 erfolgt das Senden der Kennung und des Referenz-Templates in einem (gemeinsamen) Schritt (Schritt S2). In einer anderen Darstellung könnte das Senden des Referenz-Templates auch in einem separaten Schritt erfolgen.

Die empfangene Kennung und das empfangene Referenz-Template werden in einem Schritt S3 gespeichert. Die Kennung und das Referenz-Template werden beispielsweise als Datensatz in der Zwischenspeichereinrichtung 28 gespeichert.

Die Schritte S2 und S3 werden für jedes mobile Gerät 6 ausgeführt, das sich in Funkreichweite zum Transceiver 14 befindet und gemäss dem gleichen Kommunikationsstandard arbeitet wie der Transceiver 14. Je nach Anzahl der Nutzer 2 in der öffentlichen Zone 10 kann zu einem bestimmten Zeitpunkt eine Vielzahl von Kennungen und dazugehörigen Referenz-Templates, entsprechend einer Gruppe von anwesenden Nutzern 2, in der Zwischenspeichereinrichtung 28 gespeichert sein. Der Fachmann erkennt, dass die Zwischenspeichereinrichtung 28 aktualisiert wird, wenn ein mobiles Gerät 6 nicht mehr in Funkreichweite ist, z. B. weil der dazugehörige Nutzer 2 die öffentliche Zone 10 verlassen hat ohne Zugang zur zugangsbeschränkten Zone 8 zu wünschen oder weil der dazugehörige Nutzer 2 bereits die zugangsbeschränkte Zone 8 betreten hat. Die Zwischenspeichereinrichtung 28 speichert somit die Datensätze für Nutzer 2, die zu einem bestimmten Zeitpunkt in der öffentlichen Zone 10 anwesend sind.

In einem Schritt S4 wird ermittelt, ob einer der anwesenden Nutzer 2 Zugang zur zugangsbeschränkten Zone 8 wünscht. Das Zugangskontrollsystem 1 erkennt diesen Wunsch gemäss einem Ausführungsbeispiel mit Hilfe des oben genannten Sensormoduls oder der Detektion von Hintergrundänderungen. Zum Beispiel detektiert das Sensormodul, wenn der Nutzer 2 in den Erfassungsbereich der Kamera 16 tritt, woraufhin die Kamera 16 aktiviert wird. Wird ein Zugangswunsch erkannt, schreitet das Verfahren entlang des Ja-Zweiges zu einem Schritt S5. Andernfalls schreitet das Verfahren entlang des Nein-Zweiges zurück zum Schritt S2.

Im Schritt S5 erzeugt die aktivierte Kamera 16 ein Digitalbild, das zumindest das Gesicht des detektierten Nutzers 2 abbildet, und das Bildverarbeitungsmodul 22 erzeugt aus dem Digitalbild ein Echtzeit-Template, wie an anderer Stelle dieser Beschreibung ausgeführt ist.

In einem Schritt S6 wird mittels des in Schritt S5 ermittelten Echtzeit-Templates ermittelt, ob das Echtzeit-Template einem in der Zwischenspeichereinrichtung 28 gespeicherten Referenz-Template zugeordnet werden kann.

Beim Ermitteln gemäss Schritt S6 wird in einem Schritt S7 geprüft, ob das Echtzeit-Template mit einem Referenz-Template zu einem festgelegten Grad übereinstimmt. Das Echtzeit-Template und die Referenz-Templates umfassen in einem Ausführungsbeispiel jeweils eine festgelegte Anzahl von festgelegten Gesichtsparametern und deren Werte (z. B. Augenabstand, Mundbreite, Abstand zwischen Lippenoberkante und Lippenunterkante, Abstand zwischen Nase und Lippenunterkante etc.). Beim Durchsuchen werden die Parameterwerte des Echtzeit-Templates mit den Parameterwerten der Referenz-Templates verglichen. Eine Übereinstimmung liegt vor, wenn der Grad der Ähnlichkeit der Templates mindestens dem festgelegten Grad entspricht. Der festgelegte Grad gibt eine prozentuale Übereinstimmung der Gesichtsparameter des Echtzeit-Templates mit den Gesichtsparametern eines Referenz-Templates an. Je nach Genauigkeitsanforderung kann der festgelegte Grad beispielsweise zwischen ca. 60 % und ca. 90 % gewählt werden.

Liegt Übereinstimmung vor, ist aus der Gruppe der anwesenden Nutzer 2 derjenige Nutzer 2 erkannt, der zu diesem Zeitpunkt Zugang wünscht. In diesem Fall schreitet das Verfahren entlang des Ja-Zweiges zu einem Schritt S9, in dem für diesen Nutzer 2 eine nutzerspezifische Gebäudeaktion ausgeführt wird. Die Gebäudeaktion kann beispielsweise darin bestehen, dass für den Nutzer 2 ein Zielruf (gemäss den Daten des für diesen Nutzer 2 bestehenden Nutzerprofils) ausgelöst wird, diesem Zielruf ein Aufzug zugewiesen wird und der zugewiesene Aufzug dem Nutzer 2 am Zugang 12 angezeigt wird. Die Gebäudeaktion kann auch darin bestehen, dass eine oder mehrere Türen entriegelt werden, an denen dieser Nutzer 2 zugangsberechtigt ist. Der Fachmann erkennt, dass diese Gebäudeaktionen auch in Kombination ausgeführt werden können.

Liegt dagegen keine Übereinstimmung vor, schreitet das Verfahren entlang des Nein-Zweiges zu einem Schritt S8, in dem eine Benachrichtigung erzeugt wird. Die Benachrichtigung kann den Nutzer 2 beispielsweise darüber informieren, dass ein Fehler aufgetreten ist und/oder dass sich der Nutzer 2 an einen Gebäudeverantwortlichen (z. B. Empfangspersonal, Sicherheitspersonal) wenden soll. Unabhängig davon kann im Schritt S8 auch das Sicherheitspersonal direkt benachrichtigt werden.

Aus der in Verbindung mit Fig. 3 erfolgten Beschreibung eines beispielhaften Verfahrens zum Betreiben des Zugangskontrollsystems 1 ist ersichtlich, dass ein Nutzer 2 nicht mit seinem mobilen Gerät 6 hantieren muss, um Zugang zur zugangsbeschränkten Zone 8 zu erhalten. Je nach Ausgestaltung des Zugangs, d. h. mit oder ohne physischer Barriere kann die Kontrolle der Zugangsberechtigung erfolgen, ohne dass der Nutzer 2 davon etwas bemerkt.

In einem Ausführungsbeispiel ist das Zugangskontrollsystem 1 mit einem Aufzugsystem verbunden, insbesondere mit einer Aufzugsteuerung. Die Kommunikation zwischen dem Zugangskontrollsystem 1 und der Aufzugsteuerung kann über das Kommunikationsnetzwerk 37 erfolgen. Geschieht die Zugangskontrolle beispielsweise in der Eingangshalle des Gebäudes, die die Nutzer 2 passieren müssen, um zu den Aufzügen zu gelangen, kann bei jeder Zugangsgewährung für den betreffenden Nutzer 2 ein Zielruf veranlasst werden. Die Aufzugsteuerung des Aufzugssystems verarbeitet den Zielruf und teilt ihm einen Aufzug zu. Der dem Zielruf zugeteilte Aufzug kann dem Nutzer 2 beispielsweise durch ein Terminal am Zugang 12 angezeigt und/oder mittels Sprache mitgeteilt werden. Der Nutzer 2 kann somit ohne einen Aufzugsruf eingeben zu müssen direkt zum zugeteilten Aufzug gehen.

In der in Verbindung mit Fig. 3 erfolgten Beschreibung ist jeder Nutzer 2 im Zugangskontrollsystem 1 als zugangsberechtigter Nutzer 2 registriert. Je nach Art des Gebäudes können auch nicht registrierte Nutzer 2 Zugang zur zugangsbeschränkten Zone 8 wünschen, beispielsweise Besucher. Fig. 4 zeigt ein Signaldiagramm eines Ausführungsbeispiels eines Verfahrens, das es ermöglicht, auch Besuchern komfortabel Zugang zur zugangsbeschränkten Zone 8 zu gewähren. Um ein beispielhaftes Szenario zu illustrieren, zeigt Fig. 4 schematisch Interaktionen zwischen einem Gastgeber bzw. einem von ihm benutzten Gastgebersystem 39, einem Besucher bzw. seinem mobilen Gerät 6, dem Zugangskontrollsystem 1, der Kamera 16 und einem Gebäudesystem, um den Besucher mittels eines Registrierungsverfahren im Kontrollsystem 1 zu registrieren, Zugang zu ermöglichen und eine festgelegte Gebäudeaktion auszuführen. Gemäß der hier beschriebenen Technologie ist der Besucher somit ebenfalls ein Nutzer 2 (das Bezugszeichen 2 wird im Folgenden sowohl für den Besucher als auch für einen oder mehrere Nutzer verwenden).

In diesem Szenario einigen sich der Gastgeber und der Besucher 2 auf einen Termin, d. h. auf ein Datum und eine Uhrzeit bzw. einen Zeitraum, zu dem der Gastgeber den Besucher 2 erwartet. Der Gastgeber erzeugt daraufhin beispielsweise mit dem Gastgebersystem 39 (z. B. PC, Notebook, Tablet PC, Smartphone oder mit einem anderen elektronischen Gerät) und einer darauf installierten Softwareanwendung (z. B. mit Hilfe von Microsoft Outlook^{™} oder ähnlichen Anwendungsprogrammen) eine Einladung und sendet sie dem Besucher 2, beispielsweise über das Kommunikationsnetzwerk 37 und die Kommunikationsverbindung 40. Die Kommunikationsverbindung 40 kann beispielsweise über ein Mobilfunkkommunikationssystem erfolgen.

Die Einladung umfasst neben den Terminangaben, eine der Einladung zugeordnete Identifikationsnummer (in Fig. 4 als "ID" bezeichnet) und ausserdem Angaben über einen Kommunikationskanal, den der Besucher 2 für eine Kommunikation mit dem Zugangskontrollsystem 1 zum Zweck der Registrierung zu nutzen hat. In einem Ausführungsbeispiel ist der Kommunikationskanal das Internet; die Angaben zum Kommunikationskanal umfassen daher eine Internetadresse für ein Webportal (in Fig. 4 als "Link" bezeichnet). Die Internetadresse kann beispielsweise einen einheitlichen Ressourcenzeiger (Uniform Resource Locator (URL)) umfassen, der das Webportal als Ressource über die zu verwendende Zugriffsmethode (z. B. ein verwendetes Netzwerkprotokoll wie HTTP oder FTP) und den Ort der Ressource in einem Computernetzwerk identifiziert und lokalisiert. Das Webportal ist einem Computersystem des Zugangskontrollsystems 1 zugeordnet. Die Übertragung der Einladung erfolgt in einem Ausführungsbeispiel über das Kommunikationsnetzwerk 37 mittels eines Signals DS1; sie kann zum Beispiel als Textnachricht zum mobilen Gerät 6 des Besuchers 2 oder als E-Mail an die E-Mail-Adresse des Besuchers 2 erfolgen.

Der Gastgeber bzw. das Gastgebersystem 39 sendet die Daten der Einladung mittels eines Signals DS2 außerdem zum Zugangskontrollsystem 1, beispielsweise über das Kommunikationsnetzwerk 37 und im Wesentlichen gleichzeitig zum Senden der Einladung oder zu einem späteren Zeitpunkt. Das Zugangskontrollsystem 1 legt z. B. gesteuert vom Prozessor 20 für die empfangenen Einladungsdaten ein Besucherprofil an. Die Einladungsdaten umfassen in einem Ausführungsbeispiel neben den Terminangaben außerdem Angaben über den Gastgeber, beispielsweise Name, Telefonnummer, Stockwerk und/oder Wohnungs-oder Büronummer, und den Besucher (beispielsweise Name). Außerdem kann ein Zeitfenster festgelegt sein, innerhalb dessen dem Besucher 2 Zugang zu gewähren ist. Das Zeitfenster kann zum Beispiel angeben, dass der Besucher 2 ca. eine halbe Stunde vor und nach Beginn des Termins Zugang erhält, für den Fall, dass der Besucher 2 zu früh ankommt bzw. sich verspätet. Das Besucherprofil kann nach Eintreffen des Besuchers 2 oder zu einem späteren Zeitpunkt gelöscht werden.

Nimmt der Besucher 2 die Einladung an, wird der in der Einladung angegebene Kommunikationskanal genutzt, um die Identifikationsnummer der Einladung und die Kennung des mobilen Geräts 6 an das Zugangskontrollsystem 1 zu übermitteln. Je nach Ausgestaltung kann der Besucher aufgefordert werden, die Kennung des mobilen Geräts 6 (zum Beispiel Telefonnummer oder Geräteidentifikationsnummer) einzugeben. Nimmt der Besucher die Einladung mittels des mobilen Geräts 6 an, wird in einem Ausführungsbeispiel die Kennung des mobilen Geräts 6 ebenfalls zum Zugangskontrollsystem 1 übertragen, z. B. automatisch. Ist auf dem mobilen Gerät 6 eine anwendungsspezifische Softwareanwendung installiert, wie oben beschrieben, unterstützt sie den Besucher 2 beim Annehmen der Einladung. Die Übertragung der Kennung und der Identifikationsnummer der Einladung erfolgt mittels eines Signals DS3, beispielsweise über das Kommunikationsnetzwerk 37 und die Kommunikationsverbindung 40. Die Übertragung des Signals DS3 kann gemäss einem bekannten Übertragungsprotokoll erfolgen, beispielsweise TCP (Transmission Control Protocol), IP (Internet Protocol) und UDP (User Data Protocol). Das Zugangskontrollsystem 1 speichert die empfangenen Daten (Kennung und Identifikationsnummer der Einladung) im Besucherprofil.

Die hier beschriebene Technologie kann auch andere Kommunikationskanäle nutzen. Alternativ zur Nutzung eines Webportals kann die Einladung den Besucher 2 auffordern, die Kennung und die Identifikationsnummer der Einladung an eine Gebäudeverwaltung zu übermitteln. Die Gebäudeverwaltung kann beispielsweise für das betreffende Gebäude die Datenbank 34 verwalten, in der die Nutzerprofile der zugangsberechtigten Nutzer 2 gespeichert sind. Die Übermittlung an die Gebäudeverwaltung kann beispielsweise an eine in der Einladung angegebene E-Mail-Adresse der Gebäudeverwaltung oder Telefonnummer der Gebäudeverwaltung, beispielsweise für eine SMS oder MMS Nachricht, erfolgen. Personal der Gebäudeverwaltung kann dann die Weiterverarbeitung der empfangenen Daten veranlassen.

Die Einladung fordert den Besucher ausserdem auf, ein Selbstportrait (auch als "Selfie" bekannt) von sich zu machen, z. B. mit der Kamera seines mobilen Geräts 6, und auf dem mobilen Gerät 6 zu speichern. Ein Vorteil der hier beschriebenen Technologie ist, dass der Besucher 2 das Selfie zu einem von ihm gewählten Zeitpunkt erzeugen kann, solange dies vor dem Termin erfolgt. Der Besucher 2 kann dabei geographisch weit entfernt vom Gebäude sein oder sich bereits im oder nahe des Gebäudes befinden. Die auf dem mobilen Gerät 6 installierte anwendungsspezifische Softwareanwendung unterstützt den Besucher 2 auch beim Erzeugen und Speichern des Selbstportraits als Referenz-Template des Besuchers 2.

Basierend auf dem angelegten Besucherprofil kann für den Besucher 2 gemäss dem in Verbindung mit Fig. 3 beschriebenen Zugangskontrollverfahren die festgelegte Gebäudeaktion ausgeführt werden, wenn er zum vereinbarten Termin im Gebäude erscheint. Sobald der Besucher in der öffentlichen Zone 10 in den Empfangsbereich des Transceivers 14 kommt, empfängt der Transceiver 14 die vom mobilen Gerät 6 ausgesendete Kennung und das Referenz-Template. Der Empfang der Kennung des mobilen Geräts 6 und des Referenz-Templates erfolgt wie oben beschrieben und ist in Fig. 4 mittels eines Signals DS4 dargestellt. Kommt der Besucher daran anschließend in den Erkennungsbereich der Kamera 16, erzeugt die Kamera 16 ein Digitalbild, das das Gesicht des Besuchers zeigt. Das Erzeugen des Digitalbilds durch die Kamera 16 und die daran anschließende Erzeugung eines Echtzeit-Templates erfolgen wie oben beschrieben; in Fig. 4 ist dies durch ein Signal DS5 dargestellt.

Das Zugangskontrollsystem 1 prüft, ob das Echtzeit-Template zu einem festgelegten Grad mit dem Referenz-Template übereinstimmt. Zusätzlich prüft das Zugangskontrollsystem 1, ob der Besucher innerhalb des Zeitfensters, das im Besucherprofil festgelegt ist, Zugang ersucht. Sind beide Bedingungen erfüllt, wird dem Besucher Zugang gewährt und die Gebäudeaktion veranlasst; in Fig. 4 ist dies durch ein Signal DS6 dargestellt.

Je nach Ausgestaltung des Gebäudes, kann das Zugangskontrollsystem 1 mit einer Aufzugssteuerung kommunizieren, um mit der Gewährung des Zugangs als beispielhafte Gebäudeaktion einen Zielruf für den Besucher 2 zu erzeugen. Die Aufzugssteuerung teilt dem Zielruf einen Aufzug zu, wobei der zugeteilte Aufzug dem Besucher 2 im Bereich des Zugangs 12 durch Anzeige oder Sprache mitgeteilt werden kann. Der zugewiesene Aufzug transportiert den Besucher 2 auf das Stockwerk, auf dem sich der Gastgeber befindet. Das Stockwerk des Gastgebers ist beispielsweise im Besucherprofil in Verbindung mit den Einladungsdaten gespeichert. Der Besucher 2, vor allem wenn er erstmalig im Gebäude ist, braucht sich somit nicht mit der Eingabe des Zielstockwerks zu befassen. Dem Besucher 2 kann außerdem weitere Information zur Verfügung gestellt werden, um sich im Gebäude besser orientieren zu können, beispielsweise kann dem Besucher 2 mitgeteilt werden, in welche Richtung (eventuell auch wie weit) er nach dem Aussteigen auf dem Stockwerk gehen soll. Die Mitteilung solcher Wegeleitungs-Information kann beispielsweise mittels des mobilen Geräts 6 des Besuchers 2 und/oder Anzeigen auf den Stockwerken oder in der Aufzugskabine erfolgen. In einem Ausführungsbeispiel erzeugt und sendet das Zugangskontrollsystem 1 eine Nachricht für den Gastgeber, die den Gastgeber darüber informiert, dass dem Besucher Zugang gewährt wurde. Der Gastgeber kann sich somit zeitnah auf das Erscheinen des Besuchers vorbereiten.

## Patentansprüche

1. Verfahren zum Betreiben eines Systems (1) zur Kontrolle eines Zugangs zu einer zugangsbeschränkten Zone (8) in einem Gebäude oder auf einem Gelände, wobei das System (1) eine Sende- und Empfangseinrichtung (14) zur Funkkommunikation mit von Nutzern (2) mitgeführten mobilen elektronischen Geräten (6), eine Speichereinrichtung (26, 28) und eine Bildverarbeitungseinrichtung (16, 22, 24), die eine am Zugang zur zugangsbeschränkten Zone (8) angeordnete Kamera (16) aufweist, umfasst, wobei das Verfahren umfasst:
Empfangen einer gerätespezifischen Kennung eines mobilen elektronischen Geräts (6) eines Nutzers (2) und eines vom mobilen elektronischen Gerät (6) gesendeten elektronischen Referenz-Templates für Gesichtsparameter des Nutzers (2) durch die Sende- und Empfangseinrichtung (14), sobald sich das mobile elektronische Gerät (6) in Funkreichweite zur Sende-und Empfangseinrichtung (14) in einer öffentlichen Zone (10) befindet, von der aus der Nutzer (2) Zugang zur zugangsbeschränkten Zone (8) ersuchen kann;
Speichern der empfangenen Kennung des mobilen elektronischen Geräts (6) und des elektronischen Referenz-Templates in der Speichereinrichtung (26, 28) als zu einem anwesenden Nutzer (2) gehörender Datensatz, wobei in der Speichereinrichtung (26, 28) eine Vielzahl von Datensätzen von anwesenden Nutzern (2) speicherbar ist, um für jeden anwesenden Nutzer (2) die Kennung des dem anwesenden Nutzer (2) zugeteilten mobilen elektronischen Geräts (6) und das Referenz-Template des anwesenden Nutzers (2) in dem zum anwesenden Nutzer (2) gehörenden Datensatz zu speichern, wobei der zu einem anwesenden Nutzer (2) gehörende Datensatz gelöscht und die Speichereinrichtung (26, 28) aktualisiert wird, sobald dieser anwesende Nutzer (2) die öffentliche Zone (10) verlässt und sich dessen mobiles elektronisches Gerät (6) ausserhalb der Funkreichweite zur Sende- und Empfangseinrichtung (14) befindet;
Erzeugen eines Echtzeit-Templates für Gesichtsmerkmale des Nutzers (2), sobald der Nutzer (2) Zugang zur zugangsbeschränkten Zone (8) ersucht und in einen Erfassungsbereich der am Zugang zur zugangsbeschränkten Zone (8) angeordneten Kamera (16) kommt, wobei das Echtzeit-Template durch die Bildverarbeitungseinrichtung (16, 22, 24) aus einem Bild des Nutzers (2) erzeugt wird;
Ermitteln, ob das Echtzeit-Template zu einem festgelegten Grad mit einem in der Speichereinrichtung (26, 28) gespeicherten Referenz-Template übereinstimmt, wobei bei Übereinstimmung der Nutzer (2) als zugangsersuchender Nutzer (2) erkannt wird; und
Erzeugen eines Ergebnissignals, das bei Übereinstimmung ein Ausführen einer Gebäudeaktion veranlasst, wobei abhängig vom Ergebnissignal ein Steuersignal erzeugt wird, um ein Lesen eines in der Speichereinrichtung (26, 28) gespeicherten Nutzerprofils des zugangsersuchenden Nutzers (2) zu veranlassen, um eine nutzerspezifische Gebäudeaktion zu ermitteln.

2. Verfahren nach Anspruch 1, beim dem die nutzerspezifische Gebäudeaktion ein Entriegeln einer Gebäudetür, an der der Nutzer (2) zugangsberechtigt ist, oder ein Registrieren eines Zielrufs auf ein für den Nutzer (2) festgelegtes Zielstockwerk, oder eine Kombination aus dem Entriegeln einer Gebäudetür und dem Registrieren eines Zielrufs umfasst.

3. Verfahren nach Anspruch 2, ausserdem aufweisend Erzeugen eines Steuersignals als Funktion des Ergebnissignals, um eine Barriere (18, 36) freizugeben, damit der Nutzer (2) die zugangsbeschränkte Zone (8) betreten kann.

4. Verfahren nach einem der vorhergehenden Ansprüche, bei dem das Bild des Nutzers (2) von einer Kamera (16) der Bildverarbeitungseinrichtung (16, 22, 24) erzeugt wird.

5. Verfahren nach einem der vorhergehenden Ansprüche, bei dem die Funkverbindung zwischen der Sende- und Empfangseinrichtung (14) und einem mobilen elektronischen Gerät (6) eines Nutzers (2) gemäss einem Bluetooth-Standard oder einem WLAN/WiFi-Standard erfolgt, und wobei die Sende- und Empfangseinrichtung (14) die gerätespezifische Kennung und das Referenz-Template über die Funkverbindung empfängt, wenn sich das mobile elektronische Gerät (6) in Funkreichweite der Sende-und Empfangseinrichtung (14) befindet.

6. Verfahren nach einem der vorhergehenden Ansprüche, bei dem die Kennung von einer anwendungsspezifischen Software, die auf dem mobilen Gerät (6) aktiv ist, erzeugt wird, wobei die Kennung zeitlich unveränderlich ist.

7. Verfahren nach einem der Ansprüche 1-6, bei dem die Kennung eine Geräteidentifikationsnummer oder eine einem mobilen Gerät (6) zugeordnete Telefonnummer umfasst.

8. Verfahren nach einem der vorhergehenden Ansprüche, bei dem das Echtzeit-Template und die Referenz-Templates jeweils eine festgelegte Anzahl von festgelegten Gesichtsparametern umfassen, und bei dem der festgelegte Grad zwischen ca. 60 % und ca. 90 % liegt, wobei der festgelegte Grad eine prozentuale Übereinstimmung der Gesichtsparameter des Echtzeit-Templates mit den Gesichtsparametern eines Referenz-Templates angibt.

9. Verfahren nach einem der vorhergehenden Ansprüche, bei dem, wenn sich eine Vielzahl von mobilen elektronischen Geräten (6) in der öffentlichen Zone (10) befindet, für jedes mobile elektronische Gerät (6) eines Nutzers (2), das eine gerätespezifische Kennung und ein elektronisches Referenz-Template für Gesichtsparameter des Nutzers (2) sendet, in der Speichereinrichtung (26, 28) ein Datensatz gespeichert wird.

10. System (1) zur Kontrolle eines Zugangs zu einer zugangsbeschränkten Zone (8) in einem Gebäude oder auf einem Gelände, wobei das System (1) umfasst:
eine Sende- und Empfangseinrichtung (14) zur Funkkommunikation mit einem von einem Nutzer (2) mitgeführten mobilen elektronischen Gerät (6), die zu einem Empfang einer gerätespezifischen Kennung des mobilen elektronischen Geräts (6) und eines vom mobilen elektronischen Gerät (6) gesendeten elektronischen Referenz-Templates für Gesichtsparameter des Nutzers (2) ausgestaltet ist, wobei der Empfang erfolgt, sobald sich das mobile elektronische Gerät (6) in Funkreichweite zur Sende- und Empfangseinrichtung (14) in einer öffentlichen Zone (10) befindet, von der aus der Nutzer (2) Zugang zur zugangsbeschränkten Zone (8) ersuchen kann;
eine Speichereinrichtung (26, 28), die ausgestaltet ist, um die von der Sende- und Empfangseinrichtung (14) empfangene Kennung des mobilen elektronischen Geräts (6) und das Referenz-Template des Nutzers (2) in einem Datensatz als zu einem in einer öffentlichen Zone (10) anwesenden Nutzer (2) gehörend zu speichern, wobei in der Speichereinrichtung (26, 28) eine Vielzahl von Nutzerprofilen von zugangsberechtigten Nutzern (2) und eine Vielzahl von Datensätzen von anwesenden Nutzern (2) speicherbar ist, um für jeden anwesenden Nutzer (2) die Kennung des dem anwesenden Nutzer (2) zugeteilten mobilen elektronischen Geräts (6) und das Referenz-Template des anwesenden Nutzers (2) in dem zum anwesenden Nutzer (2) gehörenden Datensatz zu speichern, wobei der zu einem anwesenden Nutzer (2) gehörende Datensatz gelöscht und die Speichereinrichtung (26, 28) aktualisiert wird, sobald dieser anwesende Nutzer (2) die öffentliche Zone (10) verlässt und sich dessen mobiles elektronisches Gerät (6) ausserhalb der Funkreichweite zur Sende- und Empfangseinrichtung (14) befindet;
eine Bildverarbeitungseinrichtung (16, 22, 24), die eine am Zugang zur zugangsbeschränkten Zone (8) angeordnete Kamera (16) umfasst und ausgestaltet ist, um
- aus einem Bild des Nutzers (2) ein Echtzeit-Template für Gesichtsmerkmale des Nutzers (2) zu erzeugen, sobald der Nutzer (2) Zugang zur zugangsbeschränkten Zone (8) ersucht und in einen Erfassungsbereich der Kamera (16) kommt, und
- zu ermitteln, ob das Echtzeit-Template zu einem festgelegten Grad mit einem in der Speichereinrichtung (26, 28) gespeicherten Referenz-Template übereinstimmt, wobei bei Übereinstimmung der Nutzer (2) als zugangsersuchender Nutzer (2) erkannt wird; und
einen Prozessor (20), der mit der Bildverarbeitungseinrichtung (16, 22, 24) verbunden ist und der ausgestaltet ist, um abhängig vom Ergebnissignal ein Steuersignal zu erzeugen, um ein Lesen eines in der Speichereinrichtung (26, 28) gespeicherten Nutzerprofils des erkannten Nutzers (2) zu veranlassen, um eine nutzerspezifische Gebäudeaktion zu ermitteln.

11. System (1) nach Anspruch 10, bei dem die Bildverarbeitungseinrichtung (16, 22, 24) ein Bildverarbeitungsmodul (22), durch das aus einer Kameraaufnahme das Echtzeit-Template erzeugbar ist, und ein Auswertemodul (24), das mit dem Bildverarbeitungsmodul (22) und der Speichereinrichtung (26, 28) verbunden ist, umfasst, wobei das Auswertemodul (24) ausgelegt ist, um ein Ergebnissignal zu erzeugen, das bei Übereinstimmung ein Ausführen einer Gebäudeaktion veranlasst.

12. System (1) nach Anspruch 11, ausserdem aufweisend eine Barriere (18, 36), die abhängig vom Steuersignal entriegelbar oder blockierbar ist.

## Claims

1. Method for operating a system (1) for controlling access to a restricted access zone (8) in a building or on a site, wherein the system (1) comprises a transmitting and receiving device (14) for radio communication with mobile electronic devices (6) carried by users (2), a storage device (26, 28), and an image processing device (16, 22, 24) which has a camera (16) located at the entrance to the restricted access zone (8), wherein the method comprises:
receiving, by the transmitting and receiving device (14), a device-specific identifier of a mobile electronic device (6) of a user (2) and an electronic reference template, transmitted by the mobile electronic device (6), for facial parameters of the user (2) as soon as the mobile electronic device (6) is within radio range of the transmitting and receiving device (14) in a public zone (10) from which the user (2) can request access to the restricted access zone (8);
storing the received identifier of the mobile electronic device (6) and of the electronic reference template in the storage device (26, 28) as a data set belonging to a user (2) present, wherein a plurality of data sets relating to users (2) present can be stored in the storage device (26, 28) in order to store, for each user (2) present, in the data set belonging to the user (2) present, the identifier of the mobile electronic device (6) assigned to the user (2) present and the reference template of the user (2) present, wherein the data set belonging to a user (2) present is deleted and the storage device (26, 28) is updated as soon as this user (2) present leaves the public zone (10) and their mobile electronic device (6) is outside the radio range of the transmitting and receiving device (14);
generating a real-time template for facial features of the user (2) as soon as the user (2) requests access to the restricted access zone (8) and comes into a detection range of the camera (16) located at the entrance to the restricted access zone (8), wherein the real-time template is generated from an image of the user (2) by the image processing device (16, 22, 24);
determining whether the real-time template matches a reference template stored in the storage device (26, 28) to a specified degree, wherein, if there is a match, the user (2) is recognized as the user (2) requesting access; and
generating a result signal which, if there is a match, prompts a building action to be carried out, wherein a control signal is generated depending on the result signal in order to prompt reading of a user profile, stored in the storage device (26, 28), of the user (2) requesting access in order to determine a user-specific building action.

2. Method according to claim 1, in which the user-specific building action involves unlocking a building door which the user (2) is authorized to access, or registering a destination call to a destination floor specified for the user (2), or a combination of unlocking a building door and registering a destination call.

3. Method according to claim 2, further comprising generating a control signal as a function of the result signal to release a barrier (18, 36) so that the user (2) can enter the restricted access zone (8).

4. Method according to any of the preceding claims, in which the image of the user (2) is generated by a camera (16) of the image processing device (16, 22, 24).

5. Method according to any of the preceding claims, in which the radio link between the transmitting and receiving device (14) and a mobile electronic device (6) of a user (2) takes place in accordance with a Bluetooth standard or a WLAN/WiFi standard, and wherein the transmitting and receiving device (14) receives the device-specific identifier and the reference template via the radio link when the mobile electronic device (6) is located within radio range of the transmitting and receiving device (14).

6. Method according to any of the preceding claims, in which the identifier is generated by application-specific software, which is active on the mobile device (6), wherein the identifier does not vary over time.

7. Method according to any of claims 1-6, in which the identifier comprises a device identification number or a telephone number assigned to a mobile device (6).

8. Method according to any of the preceding claims, in which the real-time template and the reference templates each comprise a specified number of specified facial parameters, and in which the specified degree is between approximately 60% and 90%, wherein the specified degree indicates a percentage match of the facial parameters of the real-time template with the facial parameters of a reference template.

9. Method according to any of the preceding claims, in which, when a plurality of mobile electronic devices (6) are located in the public zone (10), a data set is stored in the storage device (26, 28) for each mobile electronic device (6) of a user (2), which device transmits a device-specific identifier and an electronic reference template for facial parameters of the user (2).

10. System (1) for controlling access to a restricted access zone (8) in a building or on a site, wherein the system (1) comprises:
a transmitting and receiving device (14) for radio communication with a mobile electronic device (6) carried by a user (2), which transmitting and receiving device is designed to receive a device-specific identifier of the mobile electronic device (6) and an electronic reference template, transmitted by the mobile electronic device (6), for facial parameters of the user (2), wherein the reception takes place as soon as the mobile electronic device (6) is within radio range of the transmitting and receiving device (14) in a public zone (10) from which the user (2) can request access to the restricted access zone (8);
a storage device (26, 28), which is designed to store the identifier of the mobile electronic device (6), received from the transmitting and receiving device (14), and the reference template of the user (2) in a data set as belonging to a user (2) present in a public zone (10), wherein a plurality of user profiles of users (2) who are authorized to access and a plurality of data sets of users (2) present can be stored in the storage device (26, 28) in order to store, for each user (2) present, in the data set belonging to the user (2) present, the identifier of the mobile electronic device (6) assigned to the user (2) present and the reference template of the user (2) present, wherein the data set belonging to a user (2) present is deleted and the storage device (26, 28) is updated as soon as this user (2) present leaves the public zone (10) and their mobile electronic device (6) is outside the radio range of the transmitting and receiving device (14);
an image processing device (16, 22, 24) comprising a camera (16), which is located at the entrance to the restricted access zone (8) and is designed
- to generate, from an image of the user (2), a real-time template for facial features of the user (2) as soon as the user (2) requests access to the restricted access zone (8) and comes into a detection range of the camera (16), and
- to determine whether the real-time template matches a reference template stored in the storage device (26, 28) to a specified degree, wherein, if there is a match, the user (2) is recognized as the user (2) requesting access; and
a processor (20), which is connected to the image processing device (16, 22, 24) and which is designed to generate a control signal depending on the result signal in order to prompt reading of a user profile of the recognized user (2) stored in the storage device (26, 28) in order to determine a user-specific building action.

11. System (1) according to claim 10, in which the image processing device (16, 22, 24) comprises an image processing module (22), by means of which the real-time template can be generated from a camera recording, and an evaluation module (24), which is connected to the image processing module (22) and the storage device (26, 28), wherein the evaluation module (24) is designed to generate a result signal which, in the event of a match, prompts a building action to be carried out.

12. System (1) according to claim 11, further comprising a barrier (18, 36) which can be unlocked or blocked depending on the control signal.

## Revendications

1. Procédé permettant de faire fonctionner un système (1) pour le contrôle d'un accès à une zone à accès restreint (8) dans un bâtiment ou sur un terrain, dans lequel le système (1) comprend un dispositif de transmission et de réception (14) pour une communication radio avec des appareils électroniques mobiles (6) transportés par des utilisateurs (2), un dispositif de mémorisation (26, 28) et un dispositif de traitement d'images (16, 22, 24) qui présente une caméra (16) disposée au niveau de l'accès à la zone à accès restreint (8), dans lequel le procédé comprend :
la réception, par le dispositif de transmission et de réception (14), d'un identifiant spécifique à un appareil d'un appareil électronique mobile (6) d'un utilisateur (2) et d'un modèle de référence électronique transmis par l'appareil électronique mobile (6) pour des paramètres faciaux de l'utilisateur (2), dès que l'appareil électronique mobile (6) se trouve à portée radio du dispositif de transmission et de réception (14) dans une zone publique (10) à partir de laquelle l'utilisateur (2) peut demander l'accès à la zone à accès restreint (8) ;
la mémorisation de l'identifiant reçu de l'appareil électronique mobile (6) et du modèle de référence électronique dans le dispositif de mémorisation (26, 28) en tant que jeu de données appartenant à un utilisateur (2) présent, dans lequel une pluralité de jeux de données d'utilisateurs (2) présents peuvent être mémorisés dans le dispositif de mémorisation (26, 28) afin de mémoriser, pour chaque utilisateur (2) présent, l'identifiant de l'appareil électronique mobile (6) attribué à l'utilisateur (2) présent et le modèle de référence de l'utilisateur (2) présent dans le jeu de données appartenant à l'utilisateur (2) présent, dans lequel le jeu de données appartenant à un utilisateur (2) présent est effacé et le dispositif de mémorisation (26, 28) est mis à jour dès que ledit utilisateur (2) présent quitte la zone publique (10) et que son appareil électronique mobile (6) se trouve hors de la portée radio du dispositif de transmission et de réception (14) ;
la génération d'un modèle en temps réel pour des caractéristiques faciales de l'utilisateur (2) dès que l'utilisateur (2) demande l'accès à la zone à accès restreint (8) et entre dans une zone de détection de la caméra (16) disposée au niveau de l'accès à la zone à accès restreint (8), dans lequel le modèle en temps réel est généré par le dispositif de traitement d'images (16, 22, 24) à partir d'une image de l'utilisateur (2) ;
le fait de déterminer si le modèle en temps réel correspond, à un degré défini, à un modèle de référence mémorisé dans le dispositif de mémorisation (26, 28), dans lequel, en cas de correspondance, l'utilisateur (2) est reconnu comme utilisateur (2) demandant l'accès ; et
la génération d'un signal de résultat qui, en cas de correspondance, provoque l'exécution d'une action de bâtiment, dans lequel un signal de commande est généré en fonction du signal de résultat afin de provoquer une lecture d'un profil utilisateur de l'utilisateur (2) demandant l'accès, lequel profil utilisateur est mémorisé dans le dispositif de mémorisation (26, 28), afin de déterminer une action de bâtiment spécifique à l'utilisateur.

2. Procédé selon la revendication 1, dans lequel l'action de bâtiment spécifique à l'utilisateur comprend un déverrouillage d'une porte de bâtiment à laquelle l'utilisateur (2) a le droit d'accéder, ou un enregistrement d'un appel de destination à un étage de destination défini pour l'utilisateur (2), ou une combinaison du déverrouillage d'une porte de bâtiment et de l'enregistrement d'un appel de destination.

3. Procédé selon la revendication 2, présentant en outre la génération d'un signal de commande en fonction du signal de résultat pour débloquer une barrière (18, 36) de sorte que l'utilisateur (2) peut entrer dans la zone à accès restreint (8).

4. Procédé selon l'une des revendications précédentes, dans lequel l'image de l'utilisateur (2) est générée par une caméra (16) du dispositif de traitement d'images (16, 22, 24).

5. Procédé selon l'une des revendications précédentes, dans lequel la connexion radio entre le dispositif de transmission et de réception (14) et un appareil électronique mobile (6) d'un utilisateur (2) est effectuée conformément à une norme Bluetooth ou une norme WLAN/Wi-Fi, et dans lequel le dispositif de transmission et de réception (14) reçoit l'identifiant spécifique à l'appareil et le modèle de référence par l'intermédiaire de la connexion radio lorsque l'appareil électronique mobile (6) se trouve à portée radio du dispositif de transmission et de réception (14).

6. Procédé selon l'une des revendications précédentes, dans lequel l'identifiant est généré par un logiciel spécifique à une application, lequel logiciel est actif sur l'appareil mobile (6), dans lequel l'identifiant est invariable dans le temps.

7. Procédé selon l'une des revendications 1 à 6, dans lequel l'identifiant comprend un numéro d'identification d'appareil ou un numéro de téléphone associé à un appareil mobile (6).

8. Procédé selon l'une des revendications précédentes, dans lequel le modèle en temps réel et les modèles de référence comprennent respectivement un nombre défini de paramètres faciaux définis, et dans lequel le degré défini est compris entre environ 60 % et environ 90 %, dans lequel le degré défini indique un pourcentage de correspondance des paramètres faciaux du modèle en temps réel avec les paramètres faciaux d'un modèle de référence.

9. Procédé selon l'une des revendications précédentes, dans lequel, lorsqu'une pluralité d'appareils électroniques mobiles (6) se trouvent dans la zone publique (10), un jeu de données est mémorisé dans le dispositif de mémorisation (26, 28) pour chaque appareil électronique mobile (6) d'un utilisateur (2) qui transmet un identifiant spécifique à l'appareil et un modèle de référence électronique pour des paramètres faciaux de l'utilisateur (2).

10. Système (1) pour le contrôle d'un accès à une zone à accès restreint (8) dans un bâtiment ou sur un terrain, dans lequel le système (1) comprend :
un dispositif de transmission et de réception (14) pour la communication radio avec un appareil électronique mobile (6) transporté par un utilisateur (2), lequel dispositif de transmission et de réception est configuré pour la réception d'un identifiant spécifique à l'appareil de l'appareil électronique mobile (6) et d'un modèle de référence électronique transmis par l'appareil électronique mobile (6) pour des paramètres faciaux de l'utilisateur (2), dans lequel la réception est effectuée dès que l'appareil électronique mobile (6) se trouve à portée radio du dispositif de transmission et de réception (14) dans une zone publique (10) à partir de laquelle l'utilisateur (2) peut demander l'accès à la zone à accès restreint (8) ;
un dispositif de mémorisation (26, 28) qui est configuré pour mémoriser l'identifiant de l'appareil électronique mobile (6) reçu par le dispositif de transmission et de réception (14) et le modèle de référence de l'utilisateur (2) dans un jeu de données comme appartenant à un utilisateur (2) présent dans une zone publique (10), dans lequel une pluralité de profils utilisateurs d'utilisateurs (2) ayant le droit à l'accès et une pluralité de jeux de données d'utilisateurs (2) présents peuvent être mémorisés dans le dispositif de mémorisation (26, 28) pour mémoriser, pour chaque utilisateur (2) présent, l'identifiant de l'appareil électronique mobile (6) attribué à l'utilisateur (2) présent et le modèle de référence de l'utilisateur (2) présent dans le jeu de données appartenant à l'utilisateur (2) présent, dans lequel le jeu de données appartenant à un utilisateur (2) présent est effacé et le dispositif de mémorisation (26, 28) est mis à jour dès que ledit utilisateur (2) présent quitte la zone publique (10) et que son appareil électronique mobile (6) se trouve hors de la portée radio du dispositif de transmission et de réception (14) ;
un dispositif de traitement d'images (16, 22, 24) qui comprend une caméra (16) disposée au niveau de l'accès à la zone à accès restreint (8) et qui est configuré pour
- générer, à partir d'une image de l'utilisateur (2), un modèle en temps réel pour des caractéristiques faciales de l'utilisateur (2) dès que l'utilisateur (2) demande l'accès à la zone à accès restreint (8) et arrive dans une zone de détection de la caméra (16), et
- déterminer si le modèle en temps réel correspond, à un degré défini, à un modèle de référence mémorisé dans le dispositif de mémorisation (26, 28), dans lequel, en cas de correspondance, l'utilisateur (2) est reconnu comme un utilisateur (2) demandant l'accès ; et
un processeur (20) qui est connecté au dispositif de traitement d'images (16, 22, 24) et qui est configuré pour générer un signal de commande en fonction du signal de résultat afin de provoquer une lecture d'un profil utilisateur de l'utilisateur (2) reconnu, lequel profil utilisateur est mémorisé dans le dispositif de mémorisation (26, 28), afin de déterminer une action de bâtiment spécifique à l'utilisateur.

11. Système (1) selon la revendication 10, dans lequel le dispositif de traitement d'images (16, 22, 24) comprend un module de traitement d'images (22), au moyen duquel le modèle en temps réel peut être généré à partir d'un enregistrement de caméra, et un module d'évaluation (24) qui est connecté au module de traitement d'images (22) et au dispositif de mémorisation (26, 28), dans lequel le module d'évaluation (24) est configuré pour générer un signal de résultat qui, en cas de correspondance, provoque l'exécution d'une action de bâtiment.

12. Système (1) selon la revendication 11, présentant en outre une barrière (18, 36) qui peut être déverrouillée ou bloquée en fonction du signal de commande.
